# EUROPÄISCHE PATENTSCHRIFT

(11) **EP 0 927 376 B1**
(45) Veröffentlichungstag und Bekanntmachung des Hinweises auf die Patenterteilung: **10.04.2002**
(21) Anmeldenummer: 97939932.6
(22) Anmeldetag: 19.09.1997
(51) Int. Cl.: G02B 26/02, G02B 6/42, H01L 21/3065

(54) **VERFAHREN ZUR HERSTELLUNG EINES LICHTLEITERSCHALTERS UND LICHTLEITERSCHALTER**
A FIBER OPTIC CIRCUIT SWITCH AND A PROCESS FOR ITS PRODUCTION
COMMUTATEUR A FIBRES OPTIQUES ET PROCEDE DE PRODUCTION CORRESPONDANT

(30) Priorität: 20.09.1996 CH 230896
(43) Veröffentlichungstag der Anmeldung: 07.07.1999
(73) Patentinhaber: Ascom AG, 3000 Bern 14 (CH)
(72) Erfinder: ANTHAMATTEN, Olivier, CH-1752 Villars-sur-Glâne (CH); MARXER, Cornel, CH-2000 Neuchâtel (CH)
(74) Vertreter: Roshardt, Werner Alfred, Dipl.-Phys.
(86) Internationale Anmeldenummer: CH9700356
(87) Internationale Veröffentlichungsnummer: WO9812589

(56) Entgegenhaltungen:
- US-A- 4 725 127
- PATENT ABSTRACTS OF JAPAN vol. 004, no. 188 (P-042), 24.Dezember 1980 & JP 55 130505 A (ITAYA RYOHEI;OTHERS: 01), 9.Oktober 1980,
- IBM TECHNICAL DISCLOSURE BULLETIN, Bd. 32, Nr. 10b, März 1990, Seiten 172-174, XP002050481
- MOHR J ET AL: "MICROOPTICAL DEVICES BASED ON FREE SPACE OPTICS WITH LIGA MICROOPTICAL BENCHES EXAMPLES & PERSPECTIVES" PROCEEDINGS OF THE SPIE, Bd. 2783, 12.Juni 1996, Seiten 48-54, XP002045040

## Beschreibung

Die Erfindung betrifft ein Verfahren zur Herstellung eines Lichtleiterschalters gemäß Patentanspruch 1 und einen Lichtleiterschalter gemäß Patentanspruch 4.

Ein Lichtleiterschalter ist aus der Veröffentlichung von J. Mohr, "Mikrooptischer Schalter als Bypass-Element in optischen Datennetzwerken", 1. Statuskolloquium des Projektes Mikrosystemtechnik, Kernforschungszentrum Karlsruhe, 1993, pp. 73-77, bekannt. Der bekannte Lichtleiterschalter hat vier in ihn einmündende Lichtleiter und ein zwischen zwei Positionen hin und her schaltbares Schaltelement, zwei Kugellinsen und zwei Umlenkprismen.

In der einen Schaltposition, bei der sich das Schaltelement außerhalb des Strahlengangs befindet, wird aus einer ersten Faser austretende Strahlung mit einer ersten Kugellinse kollimiert und mit einem ersten Umlenkprisma in eine zweite Kugellinse zur Fokussierung in eine zweite Faser geführt. Dem Eingang der zweiten Faser ist ein Empfänger, ein Verstärker und ein Sender nachgeschaltet. Der Sender speist seine Strahlung in eine dritte Faser ein, welche vor der ersten Kugellinse endet, welche die austretende Strahlung kollimiert. Dieser kollimierte Strahl wird mit einem zweiten Umlenkprisma auf die zweite Kugellinse geführt, um von dieser in eine vierte Faser fokussiert zu werden.

Bei in den Strahlengang eingeschobenem Schaltelement wird die von der ersten Faser ausgehende Strahlung von der ersten Kugellinse kollimiert, der kollimierte Strahl mit dem Schaltelement auf die zweite Kugellinse umgelenkt und von dieser in die vierte Faser fokussiert.

Der bekannte mikrooptische Schalter wird in LIGA-Technik' [Röntgentiefen Lithographie, Galvanoformung, Kunststoff Abformung] ausgeführt, wobei dann die Kugellinsen in die derart hergestellte Schicht eingesetzt werden müssen.

Die Aufgabe der Erfindung ist es, einen Lichtleiterschalter zu schaffen, der mit der geforderten Maß- und Funktionsgenauigkeit einfach und damit kostengünstig mit einer schnellen Schaltbarkeit herstellbar ist.

Die Aufgabe wird durch ein Verfahren gemäß Anspruch 1 sowie durch einen Lichtleiterschalter gemäß Anspruch 4 gelöst, wobei im Gegensatz zur oben zitierten Veröffentlichung von J. Mohr der erfindungsgemäße Lichtleiterschalter neben den Lichtleitern keine einzusetzenden optischen Elemente mehr enthält. Ferner wird im Gegensatz zur obengenannten Veröffentlichung nicht mehr das LIGA-Verfahren zur Herstellung des Lichtleiterschalters verwendet, sondern erfindungsgemäß das unten beschriebene.

Anstelle des aufwendigen und damit teuren eine Synchotron-Strahlungsquelle benötigenden LIGA-Verfahrens wird das bedeutend einfacher zu handhabende Verfahren mit den Merkmalen des Patentanspruchs 1 verwendet. Mit diesem Verfahren lassen sich sämtliche für den Schalter benötigten Strukturen, einschließlich der unten beschriebenen Positionierhilfen für die Lichtleiter, welche in das fertig hergestellte Bauteil lediglich bis zu jeweils einem Anschlag eingeschoben werden müssen, herstellen.

Auch kann der im Schalter integrierte bewegliche Schaltspiegel auf einfache Art und Weise optisch vergütet werden.

Im folgenden werden Beispiele der erfindungsgemäßen Lichtleiterschalter sowie deren Herstellungsverfahren anhand von Zeichnungen näher erläutert. Weitere Vorteile der Erfindung ergeben sich aus der nachfolgenden Beschreibung. Es zeigen:
- Fig. 1: eine Draufsicht auf den erfindungsgemäßen Lichtleiterschalter,
- Fig. 2: einen Querschnitt durch einen maskierten SOI-Wafer für die Herstellung des erfindungsgemäßen Lichtleiterschalters,
- Fig. 3: einen Querschnitt analog Figur 2, jedoch nach Durchführung eines tiefen anisotropen reaktiven Ionenätzverfahrenschritts,
- Fig. 4: einen Querschnitt analog der Figuren 2 und 3, jedoch nach Durchführung eines weiteren Ätzschrittes zur Fertigstellung des erfindungsgemäßen Lichtleiterschalters,
- Fig. 5: einen Querschnitt analog Figur 4, jedoch mit eingeschobenem Lichtleiter,
- Fig. 6a: bis 6f eine Variante zum Herstellungsvorgang wie er in den Figuren 2 bis 5 dargestellt ist und
- Fig. 7: eine Variante des in Figur 1 dargestellten Lichtleiterschalters, wobei erhabene breitflächige Konturen mit einer 30°-Schraffur versehen sind.

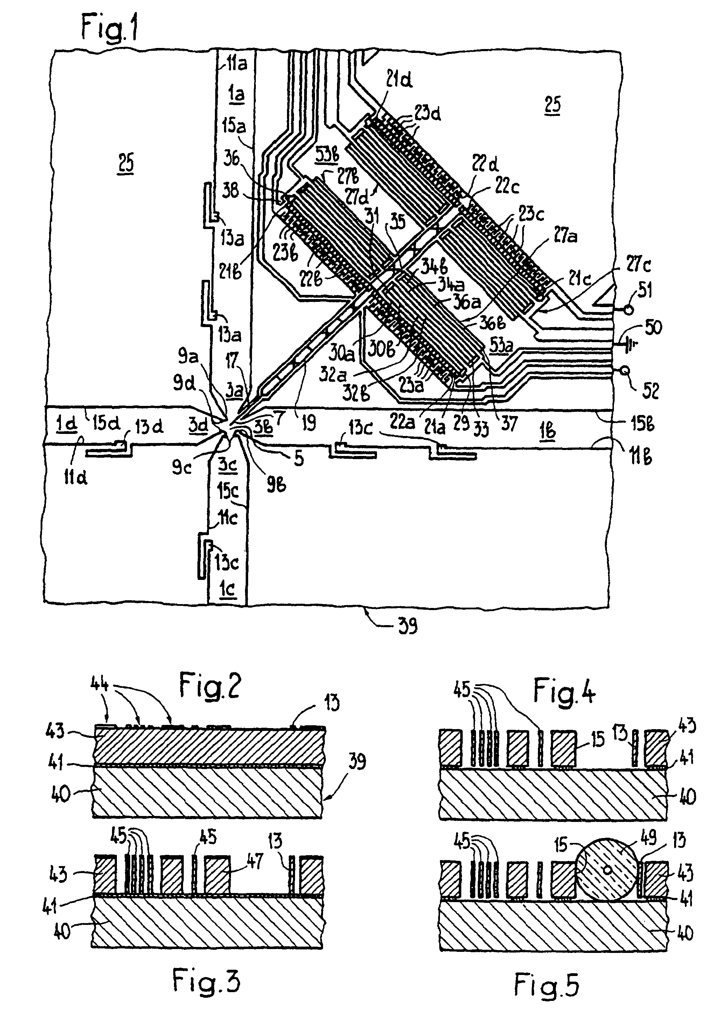

Der in **Figur 1** dargestellte erfindungsgemäße Lichtleiterschalter ist mittels eines unten beschriebenen Herstellungsverfahrens auf einem SOI-Wafer **39** (silicon-on-insulator) als Sandwich-Wafer erzeugt worden. Der Lichtleiterschalter weist vier unter rechten Winkeln zueinander angeordnete Lichtleitereinschubkanäle **1a** bis **1d** auf, in die nach der Herstellung des Schalters mit Spitzen versehene, bevorzugt zum Faserende sich verjüngende Lichtleiter einschiebbar sind. Alle Lichtleitereinschubkanäle **1a**, **1b**, **1c** und **1d** liegen in einer Ebene und laufen in je einer winkligen Verjüngung **3a**, **3b**, **3c** und **3d** auf einen zentralen Ort **5** zu, in den verschiebbar ein Spiegel **7** eingreift. Jeweils unmittelbar vor dem Ort **5** sind in den winkligen Verjüngungen **3a** bis **3d** Anschläge **9a** bis **9d** für die sich verjüngenden Lichtleiterenden ausgebildet. Die Anschläge **9c** und **9d** sind beidseitig für die jeweils betreffenden Lichtleiterenden ausgebildet; die Anschläge **9a** und **9b** aufgrund der Spiegeleinführung jedoch nur einseitig.

Die Verjüngungen **3a** bis **3d** sind derart ausgebildet, daß die Enden eingeschobener Lichtleiter so nahe wie nur möglich zueinander zu liegen kommen. Der gegenseitige Abstand wird lediglich durch den minimalen Raumbedarf des verschiebbaren Spiegels **7** bestimmt. Aufgrund dieser kompakten Anordnung kann im Gegensatz zur einleitend erwähnten Ausführung von J. Mohr auf optische Abbildungssysteme verzichtet werden.

Die sich verjüngenden Lichtleiterenden werden analog zu W. Hunziker et al., "Elliptically lensed polarisation maintaining fibers", Electronics Letters, Vol. 28, No, 7, Seite 1654-1656, 13. August 1992, hergestellt. Im Gegensatz zu dem in der Veröffentlichung ausgeführten wird jedoch der aus dem sich verjüngenden Fasermantel mit zylindrischem Querschnitt hervorstehende Kern in ein Material eingegossen und dann plan zurückgeschliffen. Nach dem Schleifen wird das Vergußmaterial wieder entfernt.

An jeweils einer Seitenwand **11a** bis **11d** der Lichtleitereinschubkanäle **1a** bis **1d** sind mehrere (hier zwei) federnde Laschen **13a** bis **13d** ausgebildet. In **Figur 1** ist der Einfachheit halber an den Wänden **11c** und **11d** nur jeweils eine der beiden federnden Laschen **13c** bzw. **13d** dargestellt. Diese Laschen **13a** bis **13d** drücken nun die eingeschobenen Lichtleiter an die andere gegenüberliegende Kanalwand **15a, 15b, 15c** bzw. **15d,** wodurch der jeweilige eingeschobene Lichtleiter gegen Herausziehen gesichert genau positioniert ist. Der Einschiebewiderstand, hervorgerufen durch diese Laschen **13a** bis **13d,** ist gering.

Der Spiegel 7 als Schaltteil ist durch einen Schlitz **17** in den Ort **5** einschiebbar. Der Spiegel **7** ist an einem filigranen Halter **19** angeordnet. Am Halterende sowie etwa in dessen Mitte ist senkrecht zu dessen Längsachse links und rechts je ein Tragbälkchen **21a** bis **21d** ebenfalls mit filigraner Struktur angeordnet. An den Balkenlängsseiten ist jeweils eine Kammstruktur **22a** bis **22d** ausgebildet. Die Kammstrukturen **22a** bis **22d** greifen alternierend in eine hierzu passende zweite Kammstruktur **23a** bis **23d.** Beim Bewegungsmechanismus der gesamten Spiegelhalterung wird insbesondere darauf geachtet, daß mechanische Schwingungen um eine Endstellung in den Ort **5** (Beeinflussung der aus den Faserenden austretenden Strahlung) vermieden oder minimiert sind oder eine derartige Ausbildung gewählt wird, daß Schwingungen eine Strahlungsübertragung oder Abblockung nicht stören. Ausführungsvarianten sind unten beschrieben.

Wird zwischen die Kammstrukturen **22a/22b** und **23a/23b** eine elektrische Spannung angelegt, so werden diese gegeneinander gezogen, wodurch der Spiegel **7** über die Tragbälkchen **21a** und **21b** und den Halter **19** in den Ort **5** hineingeschoben wird. Wird zwischen die Kammstrukturen **22c/22d** und **23c/23d** eine elektrische Spannung angelegt, so wird der Spiegel **7** aus dem Ort **5** herausgezogen.

Der Spiegel **7**, der Halter **19**, die Tragbälkchen **21a** bis **21d** und die Kammstrukturen **22a** bis **22d** sind am SOI-Wafer-Grundelement **25** über jeweils zwei paarweise links und rechts des Halters ausgebildete Federelemente **27a** bis **27d** schwebend gehalten. Die Federelemente **27a** bis **27d** sind als eine Blattfeder mit doppelt verlaufenden mäanderförmigen Blattfederteilelementen ausgebildet. Die Ausbildung der Federelemente wird anhand des Federelements **27a** erläutert. Am rechten äußeren Ende des Tragbälkchens **21a** ist ein zum Halter **19** parallel verlaufender Steg **29** ausgebildet. Ausgehend von diesem Steg **29** laufen parallel zum Tragbälkchen **21a** zwei Blattfederteilelemente **30a** und **30b,** welche in einen zur Halterlängsrichtung, dem Halter **19** benachbart liegenden Steg **31** übergehen. Von diesem Steg **31** verlaufen parallel zu den Blattfederteilelementen **30a** und **30b** zwei weitere Blattfederteilelemente **32a** und **32b,** welche in einen mit dem Steg **29** fluchtenden Steg **33** übergehen. Von diesem Steg **33** gehen wieder zwei Blattfederteilelemente **34a** und **34b** parallel zu den anderen Blattfederteilelementen **30a/b** und **32a/b** zu einem mit dem Steg **31** fluchtenden Steg **35** aus. Von diesem Steg **35** verlaufen wiederum zwei Blattfederteilelemente **36a** und **36b** parallel zu den anderen Blattfederteilelementen zu einem Ort **37** des SOI-Wafer-Grundelements **25.**

An diesem Ort **37** und den anderen hierzu analogen Orten sind der Spiegel **7**, der Halter **19,** die Tragbälkchen **21a** bis **21d** und die Federelemente **27a** bis **27d** am SOI-Wafer-Grundelement **25** mechanisch gehalten. Dieser Ort dient gleichzeitig als elektrisches Null-Potential für die Spiegelbewegung mittels der Kammstrukturen **22a** bis **22d** und **23a** bis **23d.**

Jeder der Stege **29** hat eine Nase **36,** zu der auf dem Grundelement **25** gegenüberliegend je eine feste Auskerbung **38** angeordnet ist. Nase **36** und Auskerbung **38** dienen für die Spiegelbewegung als Anschlag, um dem Spiegel eine exakt einstellbare vorgegebene Position zuzuordnen. Da die Nase **36** am Steg **29** der Federelemente **27a** bis **27d** angeordnet ist, erfolgt eine Dämpfung des Auslenkungsvorgangs zur Vermeidung von Schwingungen.

Durch die Verwendung der oben beschriebenen doppelten Kammstrukturpaare ist bei Verwendung ein- und derselben Steuerspannung der Verschiebeweg des Spiegels doppelt so groß gegenüber der Verwendung nur eines Kammpaares.

Zur Herstellung des oben beschriebenen Lichtleiterschalters wird von einem in **Figur 2** dargestellten SOI-Wafer **39** ausgegangen. Der SOI-Wafer **39** besteht aus einem monokristallinen Silizium-Substrat **40,** auf dem eine amorphe Siliziumdioxid-Zwischenschicht SiO₂ **41** aufgebracht ist. Über der Siliziumdioxid-Schicht **41** ist eine Siliziumdeckschicht **43** angeordnet. Diese Siliziumdeckschicht **43** wird mit einer Maske 44 entsprechend der in **Figur 1** in einer Draufsicht gezeigten Struktur maskiert. Elemente der Maske **44** befinden sich überall dort [dunkle Flächen in **Figur 1**], wo keine Materialentfernung stattfinden soll. Die Dicke der Deckschicht **43** wird entsprechend der in die Lichtleitereinschubkanäle **1a** bis **1d** einzuschiebenen Lichtleiter ausgewählt. Sie beträgt beispielsweise bei der Verwendung von Monomode-Lichtleitern 75 µm. Substrat **40** und Deckschicht **43** sind elektrisch leitend, während die Zwischenschicht **41** elektrisch isolierend ist.

In einer Vakuumkammer werden nun die nicht maskierten Teile der Deckschicht **43** mit einem tiefen anisotropen reaktiven Ionenätzverfahren [deep anisotropic reaktive ion etching] entfernt. Es wird bei einem Druck von 2,6 Pa, bei einer Temperatur von -95°C und einer Spannung von -70V (DC Bias) zwischen Elektrode und dem SIO-Wafer gearbeitet. Es wird ferner eine Hochfrequenz von 13,5 MHz, ein Gasfluß von SF₆ mit 200cm³/min, von O₂ mit 16 cm³/min und von CHF mit 10 cm³/min verwendet. Als Ionenquelle wird ein induktiv gekoppeltes Plasma benützt.

Dieser Materialabtragungsvorgang läuft so lange bis das unmaskierte Deckschichtmaterial bis auf die Zwischenschicht **41** abgetragen ist, wie in **Figur 3** in einem Querschnitt dargestellt ist.

In einem nächsten Verfahrensschritt werden nun mit 48-prozentiger Flußsäure bei Raumtemperatur die Zwischenschichtbereiche unterhalb der in **Figur 3** gezeigten dünnen Stege **45** unterätzt bis diese freischwebend sind. Die Zwischenschichtbereiche unterhalb der breiten Stege **47** werden lediglich kehlenförmig angeätzt. Die breiten Stege **37** bleiben aber stehen, wie in **Figur 4** gezeigt ist.

Die dünnen Stege **45** sind dann die in **Figur 1** dargestellten filigranen Teile. Da der Spiegel **7**, der Halter **19,** die federnden Laschen **13a** bis **13d,** die Tragbälkchen **21a** bis **21d** und die Federelemente **27a** bis **27d** mit ihren Blattfederteilelementen **30a/b, 32a/b** und **34a/b** sowie die Stege **31, 33** und **35** lediglich aus Elementen mit dünnen Breiten, sofern nach mechanischen Anforderungen notwendig, als filigrane Gebilde aufgebaut sind, werden sie "freigeätzt". Analoges erfolgt mit den Kammstrukturen, wobei die Kammstrukturen **23a** bis **23d** wohl unterätzt werden, aber dennoch am SOI-Wafer-Grundelement **25** festgehalten sind.

Nach der Herstellung der gesamten Struktur kann der Spiegel **7** mit einer optischen Reflexionsbeschichtung bedampft werden.

Anschließend werden die vier Lichtleiter eingeschoben und der Lichtleiterschalter ist fertig. **Figur 5** zeigt einen Ausschnitt eines Querschnitts durch den Schalter mit eingeschobenem Lichtleiter **49.** Die gesamte Anordnung kann nun mit einer Glasabdeckung versehen werden.

Der Lichtleiterschalter ist derart konzipiert, daß der Spiegel **7** im spannungslosen Zustand der Kammstrukturen **22a** bis **22d** und **23a** bis **23d** nur halb in den Ort **5** eingeschoben ist.

Der Schaltungspunkt **50** ist immer auf Nullpotential gelegt. Wird nun Spannung an den Schaltungspunkt **51** gelegt, so wird der Spiegel **7** vollständig aus dem Ort **5** herausgezogen. Die Strahlungswege der in den Kanälen **1a** und **1c** sowie der in **1b** und **1d** liegenden Lichtleiter sind nun frei durchgängig. Wird die Spannung am Schaltungspunkt **51** auf Nullpotential gelegt und an den Schaltungspunkt **52** eine Spannung angelegt, so wird der Spiegel **7** vollständig in den Ort **5** eingeschoben, wodurch der Strahlungsweg zwischen den Lichtleitern in den Kanälen **1a** und **1c** sowie **1b** und **1d** unterbrochen ist. Eine Strahlungsführung zwischen den in den Kanälen liegenden Lichtleitern **1a** und **1d** sowie **1b** und **1c** ist jetzt gegeben.

Bei dem hier gezeigten Beispiel liegt die elektrische Schaltspannung im Bereich von 30 V. Ein Schaltvorgang benötigt etwa 300 µs.

Im Gegensatz zur Ausführung der Kammstrukturen **22a-d** und **23a-d** in **Figur 1** könnten diese auch "zwischen" den Blattfederpaketpaaren angeordnet werden. Die beiden Felder **53a** und **53b** zwischen den Blattfederpaketpaaren in **Figur 1** müßten dann jedoch spannungsmäßig in vier Felder aufgeteilt werden.

Bei einer Verwendung von Monomode-Lichtleitern ist der die Lichtwelle führende Leiterkern etwa 10 µm dick. Zur Reflexion bzw. Abblockung der von den Lichtleiterenden ausgehenden, den Ort **5** transmittierenden Strahlung wird vom Spiegel **7** lediglich eine Fläche von 15 bis 20 µm beansprucht. Anstelle der oben beschriebenen Spiegelausgestaltung kann ein Spiegel mit einem Durchgriff dieser Größenordnung als Variante verwendet werden. Dieser Spiegel kann nun im Gegensatz zur Darstellung in **Figur 1** beidseits von je einem Halter mit Blattfederstrukturen gehalten sein. In diesem Fall wird man jedoch links und rechts des Halters jeweils nur ein Blattfederpaket anordnen. Der eine Halter führt dann eine Spiegelbewegung in die eine Richtung und der andere in die entgegengesetzte Richtung aus.

Die Nullpunktstellung des Spiegels **7** muß nicht in der oben beschriebenen Weise erfolgen. Der Spiegel kann derart eingestellt werden, daß er im spannungslosen Zustand entweder die Strahlung gegenüberliegender Lichtleiterenden umlenkt oder transmittiert.

In einer weiteren Variante, die auch eine Verringerung der Schaltspannung erlaubt, sind die Kammfinger der Kammstruktur **21a-d** bzw. **22a-d** unterhalb der Überlappung mit den Kammfingern der Kammstruktur **23a-d** verbreitert, so daß bei der Bewegung des Kammaktuators der Luftspalt zwischen **21a-d** bzw. **22a-d** und **23a-d** verringert wird.

Monomode Lichtleiter haben einen Kerndurchmesser von nur etwa 10 µm. Von dem Spiegel 7 wird somit nur etwa, wie bereits schon oben ausgeführt, eine Fläche von 20 µm x 20 µm benützt. Die Verwendung einer mindestens 75 µm dicken Deckschicht **43** ist nur notwendig, damit der Lichtleiterkern genügend tief zu liegen kommt.

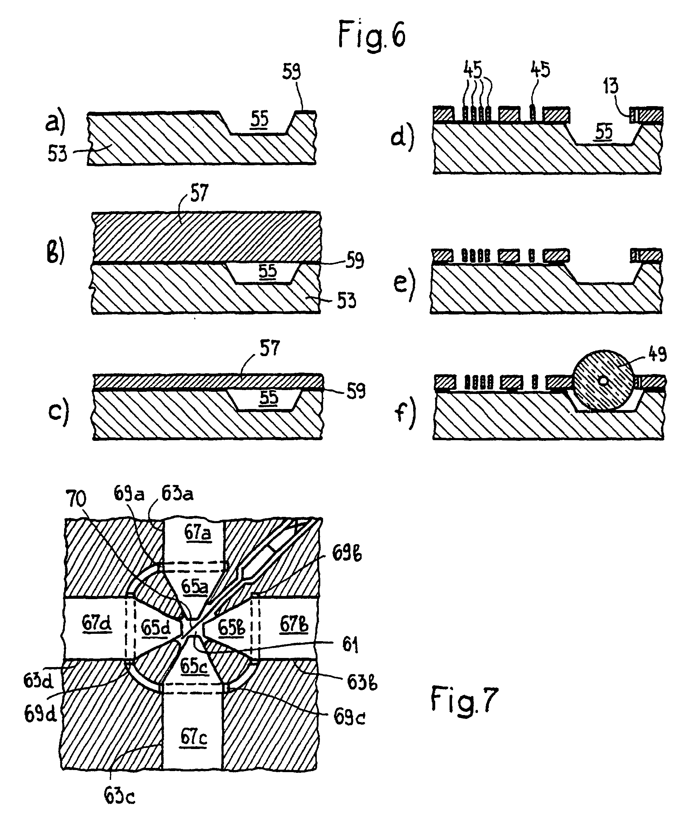

Anstelle des oben geschilderten Herstellungsverfahrens (**Figuren 2** bis **5**) kann der erfindungsgemäße Lichtleiterschalter auch mittels eines Verfahrens gemäß **Figuren 6a** bis **6f** hergestellt werden. Hier werden zuerst lediglich in das Substrat **53** als unterste Schicht Einschubkanäle für die einzuschiebenden Lichtleiter eingeätzt. Die **Figuren 6a** bis **6f** zeigen lediglich einen Einschubkanal **55**. Als Substratmaterial kann beispielsweise Silizium, Glas etc. verwendet werden. Bei dem Herstellungsprozeß gemäß Figuren 6a bis 6f wird als Substratmaterial Silizium verwendet. In das Siliziumsubstrat **53** wird lediglich ein **50** µm tiefer Kanal für die Lichtleiter, beispielsweise mit 40%-igem Kalium-Hydroxid (KOH) geätzt werden. Das Substrat **53** ist mit einer isolierenden Schicht **59** (bevorzugt ein Oxid, Nitrid, ...) versehen, welche durch oxidation oder ein CVD-Verfahren aufgebracht wird. In einem zweiten Schritt wird eine zweite Scheibe **57** (als Deckschicht) auf die erste, untere Scheibe **53** geklebt bzw. aufgebonded. Die Beschichtung **59** ist vergleichbar mit der obigen Zwischenschicht **41.** Anstatt die Beschichtung **59** auf das Substrat **53** aufzubringen, kann sie auch auf die Deckschicht **57** aufgebracht werden. Sollte die Scheibe (Deckschicht) **57** zu dick sein, kann sie herunter poliert oder geätzt werden **(Figur 6c).** Wie oben ausgeführt, ist eine Dicke dieser Schicht **57** von etwa 20 µm ausreichend. Entsprechend der zu erzeugenden Strukturen des Lichtleiterschalters erfolgt nun analog **Figur 2** eine Maskierung. Ein nun durchzuführender Materialabtragungsvorgang wird analog demjenigen der **Figuren 3** bis **5** durchgeführt. Der Materialabtragungsvorgang zu **Figur 6d** entspricht somit demjenigen zu **Figur 3**, der zu **Figur 6e** demjenigen von **Figur 4** und der zu **Figur 6f** demjenigen von **Figur 5**. Der Vorteil dieses Herstellungsverfahrens ist neben der einfachen Durchführung u.a. die bedeutend geringere Höhe der für den Schaltvorgang zu bewegenden Teile. Eine geringe Höhe ergibt eine geringe Dämpfung und damit eine verkürzte Schaltzeit.

Anstatt für den Sandwich-Wafer ein Substrat und eine Deckschicht aus Silizium und eine Zwischenschicht aus SiO₂ zu verwenden, können auch andere Materialien benutzt werden. So können als Deckschicht Metalle wie beispielsweise Aluminium, Gold etc. eingesetzt werden. Als Zwischenschicht können elektrisch isolierende Schichten wie Oxide, Nitride etc. verwendet werden. Die Zwischenschichten können beispielsweise in einem CVD-Verfahren (chemical vapor deposition) aufgebracht werden. Die Deckschicht muß elektrisch leitend sein. Als Unterschicht (Substrat) kann auch Glas verwendet werden.

In Figur 7 ist in vergrößerter Darstellung ausschnittsweise eine Ausbildungsvariante zum zentralen Ort **5**, hier mit **61** gekennzeichnet, dargestellt. Im Gegensatz zur Darstellung in **Figur 1** haben hier die mit **63a** bis **63d** bezeichneten Lichtleiterkanäle in ihrem jeweils sich verjüngenden Endteil **65a** bis **65d** keine Anschläge **(9a** bis **9d** in **Figur 1**). In **Figur 7** sind die Lichtleiter **67a** bis **67d** in die Lichtleiterkanäle **63a** bis **63d** eingeklebt. Um ein Eindringen des vor dem Aushärten noch flüssigen Klebstoffes in den zentralen Ort **61** insbesondere durch Kapillarwirkung zu verhindern, hat jeder Lichtleiterkanal vor Beginn seines sich verjüngenden Endbereichs **65a** bis **65d** eine Nut **69a** bis **69d**, welche miteinander verbunden sind. Als Klebstoff wird bevorzugt ein unter Strahlung, insbesondere UV-Strahlung aushärtender Kleber verwendet. Der Abstand der sich verjüngenden Faserenden der Lichtleiter ist so klein gewählt worden, daß eine einwandfreie Bewegung des Spiegels, hier mit **70** gekennzeichnet, gerade noch möglich ist. Je kleiner der gegenseitige Abstand der Faserenden ist, desto geringer sind die Strahlungsverluste zwischen den zu schaltenden Faserenden, d.h. desto besser ist die Signalübertragung. Das Einbringen der Faserenden erfolgt hier unter einem Mikroskop.

Um Rückreflexionen benachbarter oder zugeschalteter Faserenden zu vermeiden, sind diese mit einer Antireflexbeschichtung versehen. Die Endflächen können auch abweichend von der Senkrechten zur Faserachse geneigt ausgebildet werden. Man kann aber auch die Faserenden sowie auch den Spiegel in ein Index-Matching-Öl (gleicher Brechungsindex wie der das Signal übertragende Kern der Faser) legen.

In den oben beschriebenen Ausführungsvarianten weist die Halterung des Spiegels 7 Anschläge (Nase **36** an den Stegen **29** und Auskerbung **38**) für die jeweilige Schaltendstellung auf. In einer vereinfachten Ausführung können die Anschläge für beide Endstellungen oder für nur eine weggelassen werden, auch kann mit nur einem Federelementpaar gearbeitet werden.

Wird nur ein einziges Federelementpaar verwendet, wird man bevorzugt die mechanische Ausgestaltung derart wählen, daß im stromlosen Zustand der Spiegel in eine Lage ohne Anschlag zurückgeht. Zur Reduzierung einer Schwingungsneigung des Spiegels kann der den Spiegel beinhaltende Raum zwischen den Faserenden mit einem "Index-Matching-Öl" gefüllt werden. Durch die hierbei auftretende Flüssigkeitsreibung wird dann die Spiegelbewegung gedämpft. Die Verwendung des Öls gestattet eine Verringerung der Bauhöhe der Anordnung. Ferner werden durch das Öl Reflexionsverluste an den Faserenden vermieden oder wenigstens stark reduziert.

Anstelle der oben beschriebenen Flüssigkeitsdämpfung kann auch eine Dämpfung über den "Luftwiderstand" erreicht werden. Der Spiegel, die Kammstruktur und die Aufhängung ist dann nur entsprechend groß auszugestalten, wobei hier Grenzen durch den zur Verfügung stehenden Raum sowie durch das Gewicht (Aktuatorgewicht) gegeben sind. Es kann aber auch der Spiegel in Schaltrichtung derart groß ausgebildet werden, daß Schwingungsbewegungen des Spiegels innerhalb des Strahlquerschnitts ausgehend von den Faserenden liegen. Eine Schwingungsdämpfung des Spiegels kann aber auch durch einen entsprechend ausgebildeten Spannungsverlauf zwischen den Elektroden, hier zwischen den Kammstrukturen **22a/22b** und **23a/23b** bzw. **22c/d** und **23c/D** bewirkt werden (im Gegensatz zur Darstellung in **Figur 1** ist bei der hier geschilderten Ausführungsvariante jedoch nur eine der Kammstrukturen vorhanden).

Um eine Spiegeloberfläche mit einer möglichst geringen Oberflächenrauhigkeit zu erreichen, wird nach dem Ätzschritt **(Figur 6d)** eine Oxidation der Spiegeloberfläche vorgenommen. Anschließend erfolgt dann das Freiätzen gemäß **Figur 6e**. Anstelle der Oxidation kann auch eine Dotierung, beispielsweise mit Bor, und nachfolgender Ätzung beispielsweise in Kalilauge vorgenommen werden.

## Patentansprüche

1. Verfahren zur Herstellung eines Lichtleiterschalters mit wenigstens zwei in einer Ebene angeordneten Lichtleitern **(49; 67a - 67d)** und mit einem bewegten optischen Schaltelement **(7; 70)** beginnend mit einem Sandwich-Wafer **(39)** mit einem Grundsubstrat **(25; 40; 53),** auf dem eine elektrisch isolierende Zwischenschicht **(41; 59)** liegt, welche wiederum von einer Deckschicht **(43; 57)** überdeckt ist, wobei in einem ersten Verfahrensschritt die Deckschicht **(43; 57)** maskiert wird, und die Maskierung **(44)** derart vorgenommen wird, daß nach dem Herstellungsvorgang im Querschnitt freiliegende, bevorzugt bewegliche Teilbereiche **(45)** insbesondere des Schaltelements **(7; 70)** eine kleine erste. Breitenabmessung und auf dem Grundsubstrat **(25; 40; 53)** feststehende Schalterteilbereiche **(47)** eine gegenüber der ersten Breitenabmessung vergrößerte zweite Breitenabmessung haben, anschließend in einem zweiten Verfahrensschritt die freiliegenden Bèreiche der maskierten Deckschicht **(43; 57)** in einem Trockenätzverfahren mit einem tiefen anisotropen reaktiven lonenätzverfahren [deep anisotropic reactive ion etching] unter Ausbildung nahezu senkrechter Ätzwände bis zur Zwischenschicht **(41; 59)** geätzt werden, sowie in einem anschließenden dritten Verfahrensschritt ein nur die Zwischenschicht **(41; 59)** angreifendes Ätzmittel eingesetzt und eine Ätzzeit gerade so lang gewählt wird, bis die Zwischenschicht **(41; 59)** nur unter den Stegen **(45)** mit erster Breitenabmessung, jedoch nicht unter den Stegen **(47)** mit zweiter Breitenabmessung freigeätzt wird.

2. Verfahren nach Anspruch 1, **dadurch gekennzeichnet, daß** das Schaltelement (7;70) ein zwischen die freien, benachbarten Lichtleiterenden einschieb- und herausziehbares Schaltteil des Schaltelements hat, welches in einem weiteren Verfahrensschritt mit einer die in den Lichtleitern zu führende Strahlung reflektierenden Beschichtung versehen wird.

3. Verfahren nach Anspruch 1 oder 2, **dadurch gekennzeichnet, daß** die Maskierung **(44)** für die Deckschicht **(43; 57)** Freibereiche **(1a - 1d)** erhält, welche derart ausgebildet werden, daß deren Breite dem Durchmesser in den Lichtleiterschalter einzuschiebender Lichtleiter **(49; 67a - 67d)** entspricht und die Freibereiche **(1a - 1d)** als gerades, an den Waferseitenbereichen zu endendes Band mit Maskenteilen an einer Bandseite für in das Band hineinreichende federnde Laschen ausgebildet werden, damit nach Aufbringen dieser Maskierung **(44)** auf der Deckschicht **(43; 57)** nach dem zweiten und dritten Verfahrensschritt ein Kanal entstanden ist, von dessen einer Seitenwand **(11 a - 11d)** Zungen **(13a - 13d)** als federnde Justierelemente in den Kanal **(1a - 1d)** hineinstehen, welche einen einzuschiebenden Lichtleiter **(49; 67a - 67d)** justierend an die andere Kanalseitenwand (**15a** - **15d**) anpressen.

4. Lichtleiterschalter hergestellt nach dem Verfahren gemäß einem der Ansprüche 1 bis 3 aus einem Sandwich-Wafer (**39**) mit einem Substrat (**25;40,53**), einer Deckschicht (**43;57**) und einer elektrisch isolierenden Zwischenschicht (**41,59**) mit wenigstens zwei in einer Ebene liegenden, sich verjüngende Enden aufweisenden Lichtleitern in jeweils einem Einschubkanal **(1a - 1d)** und lediglich einem zwischen benachbarten Lichtleiterenden ein- und herausschiebbaren Schaltteil (**7;70**) eines Schaltelements, wobei die Lichtleiterenden derart nahe beieinanderliegen, daß gerade noch das Schaltteil (**7;70**) zwischenschiebbar ist, jedoch bei herausgezogenem Schaltteil (**7;70**) eine Strahlungsüberkopplung von einem Lichtleiterende zum anderen gegenüberliegenden ohne Zuhilfenahme optischer Abbildungselemente erfolgt.

5. Lichtleiterschalter nach Anspruch 4, **dadurch gekennzeichnet, daß** der Schaltteil (**7;70**) an einem filigran gestalteten Halter (**19**) angeordnet ist, wobei die Wandstärken des Halters **(19)** wie auch des Schaltteils (**7;70**) als Teil des Wafers (**39**) derart schmal ausgebildet sind, daß nach einem tiefen anisotropen reaktiven Ionenätzverfahren der maskierten Siliziumdeckschicht . (**43,57**) in einem weiteren Ätzverfahren die Zwischenschicht (**41,59**) zur Freigabe des Halters (**19**) und des Schaltteils (**7;70**) unterätzbar ist.

6. Lichtleiterschalter nach Anspruch 5, **gekennzeichnet durch** beidseitig des Halters (**19**) ausgebildete mäanderförmige Blattfederelemente (**30a/b, 32a/b, 34a/b, 36a/b, 29, 31, 33, 35**), deren eines Ende in den Halter (**19**) und deren anderes Ende in die ungeätzte Deckschicht (**43;57**) übergeht.

7. Lichtleiterschalter nach Anspruch 6, **gekennzeichnet durch** zwei hintereinander angeordnete Blattfederpaare (**30a/b, 32a/b, 34a/b, 36a/b, 29, 31, 33, 35**).

8. Lichtleiterschalter nach einem der Ansprüche 4 bis 7, **gekennzeichnet durch** eine senkrecht zur Schaltteilbewegungsrichtung angeordnete Kammstruktur zweier voneinander distanziert ineinandergreifender Teilkämme (**22a-d, 23a-d**), welche **durch** Anlegen einer elektrischen Spannung zwischen den beiden Teilkämmen (**22a-d, 23a-d**) bewegbar ist, wobei der eine Teilkamm (**23a-d**) fest als Teil der Siliziumdeckschicht (**43**) und der andere Teilkamm (**22a-d**) frei beweglich ausgebildet ist, wobei die Breite insbesondere der "freien" Kammstruktur (**22a-d**) derart gewählt ist, daß nach einem tiefen anisotropen reaktiven Ionenätzverfahren der maskierten Deckschicht und einem weiteren Ätzverfahren die Zwischenschicht (**41,59**) zur Freilegung dieses Teilkamms bzw. dieser -kämme (**22a-d**) unterätzbar ist.

9. Lichtleiterschalter nach Anspruch 8, **dadurch gekennzeichnet, daß** der bewegliche Kammteil (**22a-d**) an einer filigranen Balkenstruktur (**21a-d**) angeordnet ist, deren eines Ende in den Halter (**19**) und deren anderes Ende jeweils in eines der Blattfederelemente (**30a/b**) übergeht.

10. Lichtleiterschalter nach Anspruch 8, **dadurch gekennzeichnet, daß** die mit dem Halter zusammenwirkenden Kammstrukturen (**22a-d, 23a-d**) in Bezug auf die Blattfederelemente (**30a/b, 32a/b, 34a/b, 36a/b, 29, 31, 33, 35**) entweder aufeinander zuzeigend oder voneinander wegzeigend angeordnet sind, damit durch wahlweises Anlegen der elektrischen Spannung das Schaltteil (**7;70**) in die eine bzw. in die andere Verschieberichtung verschiebbar ist.

## Claims

1. Process for the production of a fibre optic circuit switch having at least two light guides (49; 67a - 67d) arranged in one plane and having a moving optical switching element (7; 70), starting with a sandwich wafer (39) having a base substrate (25; 40; 53) on which is situated an electrically insulating intermediate layer (41; 59) which in turn is topped by a covering layer (43; 57), the covering layer (43; 57) being masked in a first step of the process, and the mask (44) being such that after the operation transversally exposed, preferably movable sub-portions (45) notably of the switching element (7; 70) have a narrow first width and switch sub-portions (47) fixed on the base substrate (25; 40; 53) have a second width larger than the first width, following which in a second step of the process the exposed portions of the masked covering layer (43; 57) are etched in a dry-etching process involving deep anisotropic reactive ion etching, forming nearly vertical etching walls as far as the intermediate layer (41; 59), and then in a third step of the process an etching agent which only attacks the intermediate layer (41; 59) is used and the etching time is just long enough for the intermediate layer (41; 59) to only be etched clear underneath the lands (45) having the first width, but not underneath the lands (47) having the second width.

2. Process according to claim 1, **characterised in that** the switching element (7; 70) has a switching element component which is adapted to be inserted and withdrawn from between the free, adjacent light guide ends and which in a further step of the process is given a coating reflecting the radiation to be guided in the light guides.

3. Process according to claim 1 or 2, **characterised in that** the mask (44) for the covering layer (43; 57) is given free areas (1a - 1d) which are so configured that the width thereof matches the diameter of light guides (49; 67a - 67d) to be inserted into the fibre optic switch and the free areas (1a - 1d) are configured as a straight ribbon designed to terminate on the lateral areas of the wafer with mask regions on one ribbon face for resilient tabs stretching into the ribbon, so that the application of said mask (44) on the covering layer (43; 57) after the second and third steps of the process produces a channel, jutting out from one side wall (11a - 11d) of which into the channel (1a - 1d) are tabs (13a - 13d) acting as resilient fine positioning elements which press a light guide for insertion (49; 67a -67d) in a manner fine-positioning it against the other channel side wall (15a - 15d).

4. Fibre optic circuit switch produced by the process claimed in any of claims 1 to 3, from a sandwich wafer (39) with a substrate (25; 40; 53), a covering layer (43; 57) and an electrically insulating intermediate layer (41; 59) with at least two light guides situated in one plane, having tapering ends and in each case being in a push-in channel (1a - 1d), and just one switching element component (7; 70) adapted to be inserted and withdrawn between adjacent light guide ends, the light guide ends being arranged so close together that the switch component (7; 70) can only just be inserted between them, yet when the switch component (7; 70) has been withdrawn radiation coupling takes place from one light guide end to the one located opposite, without the aid of optical imaging elements.

5. Fibre optic circuit switch according to claim 4, **characterised in that** the switch component (7; 70) is arranged on a holder (19) of open-work design, the wall thicknesses of the holder (19) and of the switch component (7; 70) forming part of the wafer (39) being thin enough to allow the intermediate layer (41; 59), after deep anisotropic reactive ion etching of the masked silicon covering layer (43; 57), to be undercut in a further etching process to release the holder (19) and the switch component (7; 70).

6. Fibre optic circuit switch according to claim 5, **characterised by** serpentine leaf spring elements (30a/b, 32a/b, 34a/b, 36a/b, 29, 31, 33, 35) formed on either side of the holder (19), one end of said leaf spring elements merging into the holder (19) and the other end thereof into the unetched covering layer (43; 57).

7. Fibre optic circuit switch according to claim 6, **characterised by** two leaf spring pairs (30a/b, 32a/b, 34a/b, 36a/b, 29, 31, 33, 35) arranged one behind the other.

8. Fibre optic circuit switch according to any of claims 4. to 7, **characterised by** a comb structure, comprising two spaced meshing sub-combs (22a-d, 23a-d), arranged perpendicular to the switch component's direction of movement, said comb structure being adapted to move by passing an electrical voltage between the two sub-combs (22a-d, 23a-d), one sub-comb (23a-d) being fixedly configured as part of the silicon covering layer (43) and the other sub-comb (22a-d) being freely movable, and the width notably of the "free" comb structure (22a-d) being such that after a deep anisotropic reactive ion etching process on the masked covering layer and a further etching process the intermediate layer (41; 59) can be undercut to expose said sub-comb(s) (22a-d).

9. Fibre optic circuit switch according to claim 8, **characterised in that** the movable comb portion (22a-d) is arranged on an open-work bar structure (21a-d), one end of which merges into the holder (19) and the other end of which merges in each case into one of the leaf spring elements (30a/b).

10. Fibre optic circuit switch according to claim 8, **characterised in that** the comb structures (22a-d, 23a-d) which co-operate with the holder are arranged facing either towards or away from one another in relation to the leaf spring elements (30a/b, 32a/b, 34a/b, 36a/b, 29, 31, 33, 35), so that the switch component (7; 70) can be shifted in one or the other direction of displacement by applying the electrical voltage as necessary.

## Revendications

1. Procédé pour la fabrication d'un commutateur à fibres optiques avec au moins deux fibres optiques (49 ; 67a - 67d) placées sur un plan et avec un élément de commutation optique (7 ; 70) en mouvement, procédé qui commence par une plaquette de silicium en sandwich (39) avec un substrat de base (25 ; 40 ; 53) sur lequel repose une couche intermédiaire (41 ; 59) électriquement isolante, laquelle à son tour est recouverte d'une couche de recouvrement (43 ; 57) ; dans une première étape du procédé la couche de recouvrement (43 ; 57) étant masquée et le masquage (44) étant réalisé de telle manière que, suite à l'opération de fabrication, des zones partielles (45), en particulier de l'élément de commutation (7 ; 70), libres dans leur section transversale de préférence mobiles ont une première dimension de largeur qui est petite et des zones de parties de commutateur (47) fixes sur le substrat de base (25 ; 40 ; 53) ont une deuxième dimension de largeur qui est agrandie par rapport à la première dimension de largeur, puis, dans une deuxième étape du procédé, les zones libres de la couche de recouvrement (43 ; 57) masquée sont gravées au cours d'un procédé de gravure à sec à l'aide d'un procédé lithographique ionique réactive anisotrope profonde avec formation de parois gravées à peu près verticales jusqu'à la couche intermédiaire (41 ; 59) puis, dans une troisième étape du procédé, on utilise un agent de gravure qui ne grave que la couche intermédiaire (41 ; 59) et on choisit un temps de gravure exactement tel que la couche intermédiaire (41 ; 59) soit libérée par gravure uniquement au-dessous des arêtes (45) avec la première dimension de largeur mais pas sous les arêtes (47) avec la deuxième dimension de largeur.

2. Procédé selon la revendication 1 **caractérisé en ce que** l'élément de commutation (70) a une partie de commutation de l'élément de commutation qu'il est possible d'enficher et de retirer entre les extrémités des fibres optiques libres voisines, laquelle partie, dans une nouvelle étape du procédé, est munie d'un revêtement qui réfléchit le rayonnement à conduire dans les fibres optiques.

3. Procédé selon la revendication 1 ou 2 **caractérisé en ce que** le masquage (44) pour la couche de recouvrement (43 ; 57) conserve des zones libres (1a - 1d) formées de telle manière que leur largeur correspond au diamètre des fibres optiques ( 49 ; 67a-67d) à introduire dans le commutateur à fibres optiques et que les zones libres (1a - 1d) ont une forme de bande rectiligne qui se finit sur les zones latérales des plaquettes de silicium, avec des parties de masque sur un côté de bande destinées aux barres de liaison élastiques qui pénètrent dans la bande, pour que, après avoir procédé à ce masquage (44) sur la couche de recouvrement (43 ; 57) après la deuxième et la troisième étape du procédé, l'on ait obtenu un canal ; sur l'une des parois latérales (11a - 11d) de ce canal avancent dans le canal des languettes (13a - 13d) servant d'éléments élastiques d'ajustage, lesquelles appuient sur l'autre paroi latérale du canal (15a - 15d) une fibre optique (49 ; 67a - 67d) à introduire.

4. Commutateur à fibres optiques fabriqué selon le procédé en accord avec l'une des revendications 1 à 3 constitué d'une plaquette de silicium en sandwich (39) avec un substrat (25 ; 40, 53), une couche de recouvrement (43 ; 57) et une couche intermédiaire (41 ; 59) électriquement isolante avec au moins deux fibres optiques qui sont placées dans un plan, qui présentent des extrémités qui s'amincissent, et chacune des fibres optiques se trouve dans un canal d'introduction (1a - 1d) et avec seulement une partie de commutation (7 ; 70) de l'élément de commutation (7 ; 70) qu'il est possible d'enficher et de retirer entre des extrémités voisines de la fibre optique ; les extrémités de la fibre optique étant placées à proximité l'une de l'autre de telle manière qu'il est alors juste possible d'y glisser la partie de commutation (7 ; 70), mais lorsqu'on retire la partie de commutation (7 ; 70) il s'ensuit un surcouplage de rayonnement d'une extrémité de fibre optique à l'autre qui se trouve vis-à-vis sans recours à des éléments de reproduction optique.

5. Commutateur à fibres optiques selon la revendication 4 **caractérisé en ce que** la partie de commutation (7 ; 70) est reliée à un support (19) filigrané, l'épaisseur de paroi du support (19) ainsi que de la partie de commutation (7 ; 70) en tant que partie de la plaquette de silicium (39) étant d'une étroitesse telle que, après un procédé de gravure ionique réactive anisotrope profonde de la couche de recouvrement (43 ; 57) masquée en silicium, on peut graver la couche intermédiaire (41 ; 59) de façon sous-jacente au cours d'un nouveau procédé de gravure pour libérer le support (19) et la partie de commutation (7 ; 70).

6. Commutateur à fibres optiques selon la revendication 5 **caractérisé par** les éléments élastiques à lames (30a/b, 32 a/b, 34 a/b, 36 a/b, 29, 31, 33, 35) qui forment des méandres et sont placés de chaque côté du support (19) et dont une des extrémités aboutit sur le support (19) et dont l'autre extrémité aboutit dans la couche de recouvrement (43 ; 57) non gravée.

7. Commutateur à fibres optiques selon la revendication 6 **caractérisé par** deux paires élastiques à lames (30a/b, 32 a/b, 34 a/b, 36 a/b, 29, 31, 33, 35) disposées l'une derrière l'autre.

8. Commutateur à fibres optiques selon l'une des revendications 4 à 7 **caractérisé par** la présence d'une structure en peigne disposée perpendiculairement à la direction du mouvement de la partie de commutation, formée de deux peignes partiels (22a-d, 23a-d) qui sont placés à distance l'un de l'autre et qui s'interpénétrent, laquelle structure est mobile par l'application d'une tension électrique entre les deux peignes partiels (22a-d, 23a-d) ; l'un des peignes partiels (23a-d) étant formé en tant que partie fixe de la couche de recouvrement (43 ; 57) en silicium et l'autre peigne partiel (22a-d) pouvant se mouvoir librement ; la largeur, en particulier celle de la structure en peigne " libre " (22a-d), étant choisie de telle manière qu'après un procédé de gravure ionique réactive anisotrope profonde de la couche de recouvrement (43 ; 57) masquée et un autre procédé de gravure on peut graver la couche intermédiaire (41 ; 59) de façon sous-jacente pour libérer ce ou ces peignes partiels (22a-d).

9. Commutateur à fibres optiques selon la revendication 8 **caractérisé en ce que** la partie en peigne mobile (22a-d) est reliée à une structure de barres filigranée (21a-d) dont une des extrémités aboutit sur le support (19) et dont l'autre extrémité aboutit à chaque fois sur un des éléments élastiques à lames (30a/b).

10. Commutateur à fibres optiques selon la revendication 8 **caractérisé en ce que** les structures en peigne (22a-d, 23a-d) à effet conjoint avec le support sont placées par rapport aux éléments élastiques à lames (30a/b, 32 a/b, 34 a/b, 36 a/b, 29, 31, 33, 35) soit vis-à-vis l'une de l'autre soit détournées l'une de l'autre pour que la partie de commutation (7 ; 70) puisse glisser dans l'une ou dans l'autre des directions de déplacement par l'application éventuelle d'une tension électrique.
